# EUROPEAN PATENT APPLICATION

(11) **EP 1 513 355 A2**
(43) Date of publication of application: **09.03.2005**
(21) Application number: 04077403.6
(22) Date of filing: 25.08.2004
(51) Int. Cl.: H04Q 7/22

(54) **Access concentrating system of fixed and mobile telephony services**

(30) Priority: 25.08.2003 BR 0302755
(71) Applicant: Novatech Telecom Industria e Comércio de Equipamentos Electronicos Ltda., Campinas, SP, CEP:13053-154 Sao Paulo (BR)
(72) Inventor: Moreno Marques, Edouardo, Belo Horizonte Minas Gerais (BR); Luis Batista, Cassio, Belo Horizonte Minas Gerais (BR)
(74) Representative: Gaucherand, Michel

(57) **Abstract**

The present invention mentions a system that allows an user of the wireless mobile system to have access to the PSTN. Using its mobile device (9) connected to a concentrator (1), through an mobile radio interface, when the user will be located in the neighborhoods of the concentrator, also he allows the mobile terminal (9) to have access the mobile network when the user leaves the area of covering of the mentioned concentrator. The system is composed of a mobile device(9) with capacity of access to the wireless mobile system, a concentrator (1) that it includes an adapting module of wireless access (2), that it is added to the module of access to a fixed network. The submodule of access to the analogical line (11) can be connected to a MUX/DEMUX pair(13). This pair MUX/DEMUX (13) is used to combine the users pertinents to the area of covering of the concentrator in an only analogical line. Using the VoIP solution, Gateway is used (4) that it will make the conversion of the voice signals and signalling, when carried on IP, to signalling and transport of the voice signal, used for the PSTN. For the applications of voice on IP, they are necessary servers for management of the sessions, as SIP Server(6). The signalling plan could include authentication, authorization and billing for the subscriber in such a way in the fixed network as in the wireless mobile network, possessing for this purpose a AAA Server (8).

## Description

### FIELD OF THE INVENTION

The present invention is associated with communications systems. Specifically, it is related to a system that makes the public fixed telephony network available to a cellular mobile system user operating a mobile device through a fixed access.

### BACKGROUND OF THE INVENTION

The convergence of fixed and mobile systems has been discussed for some time under several different evolution conceptions of telecommunications systems. However, so far, none of the proposed systems has presented the required technology and commercial viability to gain the mass market. The fixed and mobile systems convergence is part of the ITU (International Telecommunication Union) IMT-2000 project's conception and it can be referenced either through the corresponding Internet site: http://www.imt-2000.org/portal/index.asp, which contains it's ideas and links to other related sites, or by using the ITU site: http://www.itu.org. Both solutions presented separately by ITU and ETSI (European Telecommunication Standard Institute) are based on the cordless systems for networks of fixed telephony, formerly called WLL (Wireless Local Loop) and subsequently named FWA (Fixed Wireless Access). Specifically, within the third generation systems (or simply "3G"), a family of radio interfaces for access is included - as DECT (Digital European Cordless Telephony) for example - and further information can be obtained in the Internet site http://portal.etsi.org/ Portal_Common/home.asp. More data on DECT as well as on PHS and PACS (the two last ones are different versions of systems with the same objectives, developed as standardizations in Japan and the U.S.A. - the American one by the Joint Technical Committee - JTC) is available in the document "A Comparative Evaluation of DECT, PACS, and PHS Standards Wireless Local Loop Applications"; IEEE Communications Magazine; May; 2001. Another possible solution for the convergence of fixed and mobile services is based on another ETSI proposal which is standardized by the 3GPP (Third Generation Partnership Project): the GSM Cordless Telephony System (CTS). This standardization presents a standardized CTS system with a series of services using the GSM air interface, with modifications in the system and terminal software. Further detailing of this solution can be obtained from the document: 3GPP TS 42,056 V5.0.0 (2002-06) "GSM Cordless Telephony System (CTS), Phase 1; Service description; Stage 1".

A solution based on the use of Intelligent Networks for the convergence of the fixed and mobile services can also be adopted. The foundations of the structure of intelligent networks have been laid upon the signaling network of telecommunications networks, based on the protocol stack called ANSI SS7 (Signaling System 7), standardized at ITU. It is composed by an SSP (Service Switching Point) at which Detection Points are constructed for signaling transfer to an SCP (Service Control Point) that possesses the service's logic. This logic is established through a so called Service Creation Environment (SCE). Several solutions with this approach can be found. A solution that illustrates this approach can be seen in Siemens' Internet site: http://www.siemens.ie/mobile/ intelligent_networks/. The document: "Fixed-Mobile Convergence Strategy: Technologies and Market Opportunities"; IEEE Communications Magazine; February; 2000, illustrates the fixed and mobile services convergence strategies and presents the solution based on intelligent networks.

Currently, the integration of fixed and mobile networks is being seen as an additional component of what is being proposed to be 4G, where there is a common IP Core with QoS (Quality of Service) for a large number of access networks, including fixed access networks and mobile radio access networks. These systems are evolving in function of a large research effort which will yield the next evolution of the current telecommunications system. Several protocols are being created in the ambit of standardization organizations of international telecommunications services, as the ITU and regional offices and as for example the ETSI, and under the realm of standardization organizations of telematic services, as for example the organization for Internet protocols standardization, the IETF. Additional information about the current evolution conception of the network towards the convergence can be found in the article: "A View of Telecommunications Network Evolution"; IEEE Communications Magazine; December; 2002.

One another proposal for the convergence of fixed and mobile services applied for PBX systems is presented in the American patent No. 5.890.064. This patent mentions a called system to it Wireless Office, made up of a of private telephony Network (PTN), with fixed terminals (FTs) that it is combined to the wireless network and to provide mobile service with corporative mobile terminals (CMTs). The CMTs appears for the system Wireless Office as normal fixed extensions. The CMTs can make roaming for the area of the cellular mobile network, out of the covering area of the system wireless office. For this, it possess a Wireless Office Gateway that provide an interface with the MSC with the mobile system, through a trunk PBX or of an interface PRI (Primary Rate Interface) of the ISDN. In the wireless network, the service of intelligent network for management of the mobility of the CMT is used, considering its private number (PN). The WO Gateway (Wireless Office GW) possess the functionality of VLR and capacity to interrogate the HLR. All the calls involving CMTs are coursed through the PTN. The CMTs office can make to handover between cells of the wireless system and the cellular mobile system. The radio access network (RAN) of the system Wireless Office includes functional entities to carry through all required functions for the control and routing/coursing of the Wireless Office system. Although the American Patent No. 6.526.033 B1 does not consider a convergence of the mobile and fixed systems, the invention proposed in the patent mentions a system that substitutes the cellular infrastructure through InterNet for users in roaming and the possibility of accomplishment of roaming user out of its service area. Also, the possibility is mentioned to it to make roaming of an CDMA user for a - GSM network and on the contrary, using signalling through the InterNet. The voice service in the visited net would be provided with the H.323 protocol. The GSM user could, in this case, prevent agreements of roaming and the fixed network usage, making the payment through credit card and using Mobile IP to support mobility and, in this form to have access to a CDMA network. For security solution, it suggests the use of the algorithm Diffie Hellman. For the considered system it is suggested the use of terminals with dual-mode operation capacity (CDMA or GSM). The terminal would have a special identification to classify it as the capacities for this system.
The American Patent No. 6.385.195 B2 also does not consider the integration of the fixed and mobile system, but this invention is an improvement of the IWF that supports the direct digital inter-operation between the radio access network and standardized IP network. It supports voice transcoding and inter-operation of data in the IWF general propositions and provide specific translation with the codification methods of radio interface, for example, VSELP, ACELP, AFR, GSM-EFR, directly for Voice protocols on IP (VoIP).In different versions would support or not intermediate conversion PCM or analogical. In another aspect, the invention is a method of inter-operation between used protocols of cellular voice in TDMA wireless networks and InterNet protocols used for a terminal System InterNet (InterNet End-System; ES). In another aspect, it is a method of inter-operation between used protocols of cellular fax in TDMA mobile network and InterNet protocols.
A problem in the fixed and mobile system convergence presented in the initial vision based on systems of type FWA is that, appears the necessity of specification of a new radio interface standardization for the fixed access. In This way, the convergence in the terminal, so that it occurs, needs production in scale of terminals in dual mode, or either, that it integrates in its production the two radio interfaces in one same device. The technologies for the two radio interfaces are different and the production cost finishes being higher. So that, this alternative still was not made possible, despite the initiatives, without success, of DECT integration with the GSM in Europe.
Although the solution presented by the ETSI for CTS to use the same interface for the mobile network and access to a CTS system, are necessary alterations in software of the network and in the terminals. This solution is not being commercially employed.
Although, the solution based on intelligent network, can come to solve the problem of the fixed and mobile networks integration, its conception is different of the presented one for this invention. The solution of convergence with intelligent networks to provide a form to manage the subscriber and to generate an unified form of billing between the fixed and mobile networks. However, the convergence, in the solution with intelligent network, is only mentioned to the account service of the two networks users. Also the access to the two networks is possible through specific terminals and access for each one. Basically, the services of the fixed network are provided to the subscriber through a terminal of the fixed network and the services of the mobile network are provided through a terminal of the mobile network. The solution proposed in this invention, presents protocols of mobile radio access and solutions provided for the InterNet that allow an only mobile terminal to have access to fixed and mobile services.

The solutions proposed more recently are based on the development of the Telecommunication networks and will depend on developments that are still not commercially available. Moreover, there are an enormous bequeathed network already with high capillarity, capacity and quality in the whole world and, the substitution of this network will not occur short-term. However, some protocols that had been developed, to be employed inside of this new architecture of the network, can be already used. Therefore, these protocols can be added to the current telecommunication networks, using the parts of wideband access network, fixed network and circuit switched mobile network, developed for telecommunication networks, integrated to developed networks for data, specifically, the current InterNet, and packet switched mobile network.

In relation to the concentrator system described in this report, the American patent No. 5.890.064 provide, also, an integration of a service developed for fixed network, a PBX, that integrates the mobile network. The patent in question adds to the PBX, functionalities of management of mobility and module of mobile radio access integrated to the PBX. In this form, its corporative mobile terminals (CMTs) can make roaming for the cellular mobile system. When the corporative user will be out of its corporative system area of covering, it has access the cellular mobile network, in its area of service, and its call is directed to the PBX of its corporation and consequently, to the fixed network. The solution proposed in this invention is different for being simpler than the considered PBX, and it does need no functionality of management of mobility.

In relation to the concentrator system described in this report, the American patent No. 6.526.033 B1 touching the invention for considering a management of mobility based on the InterNet, for terminals out of its home network. In this case, the solution of the concentrator is a -more comprehensive solution, therefore it includes the integration of the access to the fixed network. Although, mobility through the InterNet can be managed, the concentrator can be implemented with no extra functionality of management of mobility.

In relation to the concentrator system described in this report, the American patent No. 6.385.195 B2 has a specific application in TDMA mobile network ,in which it considers an expansion of the functionalities of a specific network entity, the IWF. In this way, it considers a inter-operation of the TDMA acess network with the InterNet, using, the InterNet VoIP. The concentrator described in this report is more comprehensive, including alterations in the access form, allowing the integration of the fixed network and the cellular mobile network, for all the mobile terminals.

### SUMMARY

The present invention mentions a system that allows an user of the cellular mobile system to have access the network of fixed telephony, using its mobile device, through a fixed access. This solution presents an innovative form of integration of the fixed and mobile network, using the mobile device for the two services, using the standardized radio interface for mobile cellular system and being able to concentrate the access to the fixed network. The acces to the fixed network can be done by analogical subscriber line or by some broadband access. In this case, reaching the local network in the domain of the fixed operator , the voice signal and the signalling are converted by a gateway to the fixed public switched telephone network. In this case, the access to the cellular mobile network or to the fixed one, is carried through, automaticaly, using the mobile radio interface properties. Some services could be provided using technologies and protocols developed for the transmission of data, and based on the InterNet.

### SOON DESCRIPTION OF THE DRAWINGS

Figure 1 presents fixed and mobile telecommunications networks as they configure themselves today.
Figure 2 illustrates the plan of voice traffic and data of the system considered in this invention, of fixed and mobile convergence.
Figure 3 illustrates the plan of signalling of the system considered in this invention, of fixed and mobile convergence.
Figure 4 presents a bigger detailing of the concentrator interface with the fixed network, including Multiplexer/Demultiplexer (MUX/DEMUX) in such a way in the concentrator how much in the operator of fixed network.

### DETAILED DESCRIPTION

The invention of the fixed and mobile concentrator of access does not depend on an evolution of the network. However, the solution proposal will be able to evolve, not using gateways for interconnection with the fixed and mobile circuit switched network, and in this way will be adherent to the network evolution, however, using the mobile terminal for access to fixed and mobile networks.
The system was conceived for voice communication, or either, service of telephony, being able to concentrate the services of data, including access to InterNet. Concentrating the services of data in packages based on IP (Internet Protocol), including Voice on IP (VoIP), the mobile device must possess additional capacity of support for packet data transmission. However, in the proposal presented in this invention, the use of any type of mobile terminal is allowed for access to the voice service. To have access the InterNet and to allow the use of data services, the system uses a Broadband access to the PSTN, as for example, the access through a modem ADSL. For the solution offering the voice service, the access to the fixed network will be done through the analogical line.

### The concentrator system is composed of:

- A mobile terminal (9) of generation 2G, 2,5G and/or 3G, capable to transmit data in packages, through the mobile operator, and to use the service of mobile telephony, and all the services that the cellular mobile operator makes use, with capacity of access to an mobile radio interface; or a mobile terminal, that can be a Pocket PC or a Handheld PC, with accessory to connect itself to the cellular mobile operator; in case that it does not concentrated the capacities for access to the data service, a cellular mobile terminal 2G (TDMA, CDMA or GSM) could be used.
- A modular concentrator (1), that it understands an wireless access adapting module (2), that it consists of an mobile radio access point and, a module for access to the fixed network, composed for a submodule of access to the analogical line (11) and being able to have an broadband access submodule (for example, a modem ADSL) (10). The submodule of access to the analogical line (11) can be connected to a Multiplexer/Demultiplexer (13). This Multiplexer/Demultiplexer is used to combine the pertinent users to the concentrator area of covering in an only analogical line. Of the side of the fixed network operator also a Multiplexer/Demultiplexador is used (13) to combine the analogical connections that come from the switch, in order to uses the same analogical line of access. The basic function of the concentrator is to provide an wireless interface to one mobile terminal, to have access to a fixed service. It is the central element of the conception of the system. The adapting module of wireless access has standardized interface and is compatible with mobile terminals in commercial availability. In the modality where the cellular mobile telephone has interface for the transmission of packet data compatible with the adapting module interface of wireless access connected to an broadband access module, this connection could directly be made. The basic component for the concentrator is the adapting module of wireless access (2) for the mobile communication radio interface used with an interface for the submodule of access to the analogical line (11), through the analogical line (only for voice service). Other modules of the adapter of wireless access (2) are used for interface with the broadband access submodule (10) (for services of voice and/or data).

For the access to data services, ones include Voice services over IP (VoIP). In this case, Gateways (4 and 5) make the conversion of the voice signal with codes used for the mobile systems for codes used for digital transmission in the fixed network of telephony. Also, gateways (4 and 5) makes the conversion of the signalling used in the network based on IP for the used signalling for the PSTN. These gateways allow the use of the current PSTN networks. With the evolution of the core of the network for next generation network, based in packages with quality of service (QoS) these gateways will not be more necessary for this solution. In this form, the signal of voice and the signalling will be carried through voice over IP, using SIP and the protocols for transport of the coded signal of voice, with control of the delays, as, for example, the protocol of the IETF, Real Time Transfer Protocol, RTP and, the Real Time Control Protocol, RTCP, through this next generation network. The user does need to make no configuration, a time that all necessary configuration is carried through by the operator who is providing the service.
The user has access to the service through an operator of cellular mobile telephony or an operator of fixed telephony, through the broadband access or analogical line.

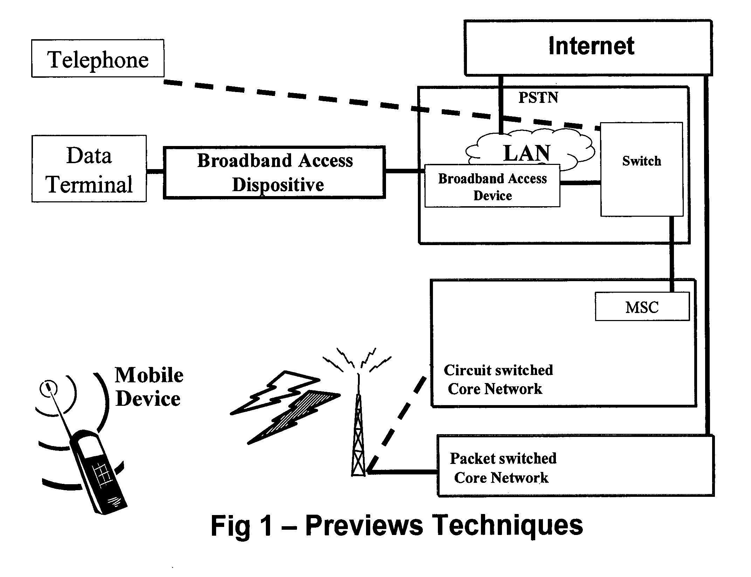

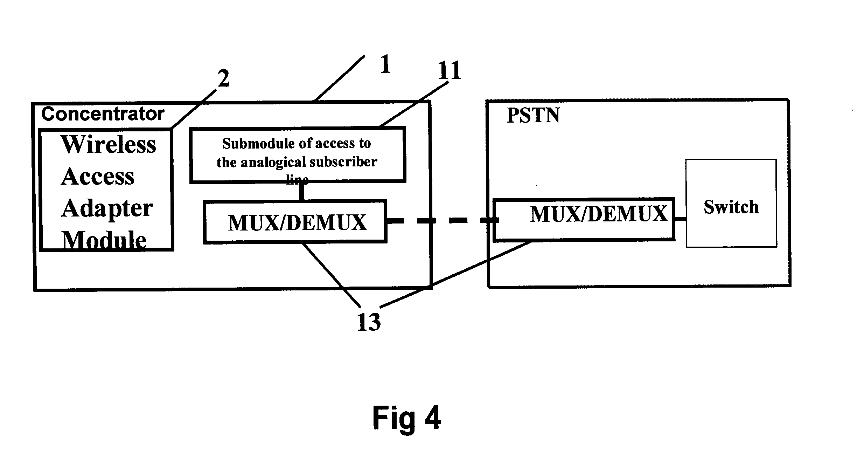

In figure 1 the PSTN and the wireless mobile network are shown, which the wireless mobile network is composed by a circuit switched and a packet switched core network, as indicated in the figure . The current PSTN, also, present possibility of access to the InterNet, using Brodband access. This access is composed for a modem that it transmits the signal of a terminal, through an analog telephone line. Of the side of the PSTN, there is a modem that interconnects the line of the subscriber to the InterNet, called , in the figure, Terminal Equipment of the BroadBand Access. The mobile device is used, in this case, only for access to the wireless mobile network, being able to have access to the circuit switched Core Network or Packet Switched Core Network, using specific interfaces for each one.

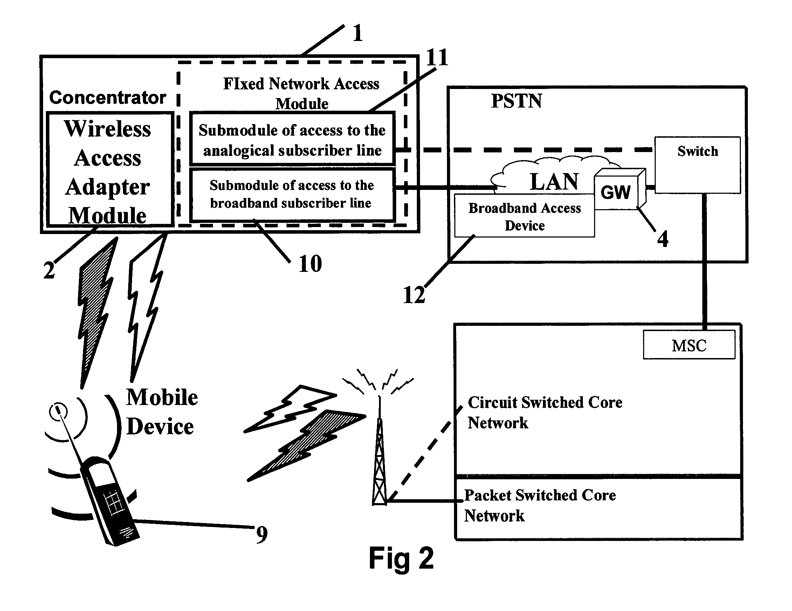

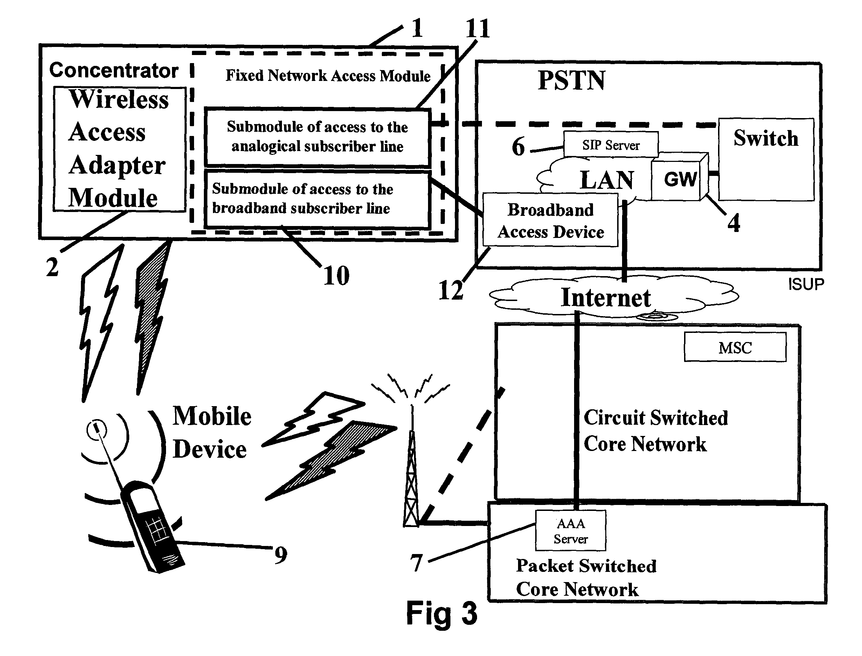

Figure 2 presents the traffic plan of the present invention. The considered traffic includes data and voice. The invention is composed by a mobile terminal (9) which access the wireless mobile network through the mobile radio interface of the wireless mobile system. For some devices, the access to the wireless mobile network will be possible through the packet switched component, using Voice over IP. In case of this access were made using Voice over IP, it must have a SIP Server in the Packet Core Network (7), as in figure 3. For this, the packet switched component of the aerial interface must implement mechanisms to provide Quality of Service (QoS).
This exactly terminal will be able to have access the PSTN through the interface of the cellular mobile system, in case of conventional terminals 2G, 2,5G or 3G.
To choose between the PSTN access or to the wireless mobile network one, a resource of the mobile aerial interface is used, independent of the user action. The concentrator is composed of an adapter for wireless access (2), Which is constituted of a point of access with mobile radio interface to connect the signal of voice over IP to the Broadband access used to have access to fixed network, as represented in figure 2, for the full line. In this form, in the local PSTN network, it must have, for the solution, a server SIP (6), as in figure 3.
In this case, in the PSTN, one must have, for the solution, one gateway (4), represented in figure 2 as GW. This gateway is used to make the conversion of the signal coded for transmission over IP for the transmission in circuit switched network.
The adequate solution to the conventional terminals 2G, to have access to the PSTN, is carried through the conversion of the signal of the aerial interface of the wireless mobile system for an interface of analogical line, represented in figure 2 for the dotted line. For this application, the adapter of the wireless access converts the voice traffic in such a way how much the signalling.
The plan of signalling to provide this convergent system, includes signalling SIP in the Broadband Access. Moreover, to provide authentication, authorization and Billing for the subscriber in such a way in the PSTN as in the wireless mobile network.
In figure 3 it is represented the signalling used in the PSTN and the interfaces of signalling used through the InterNet. The dotted line is used to present the solution for the conventional terminals 2G access to the analogical subscriber line of the PSTN.
The equipment (the hardware) includes a mobile device (9), a modular concentrator (1) which includes a module adapting of wireless access (2) to a module of access to fixed network that includes a submodule of access to analogical line (11) being able to be connected to a Multiplexer/Demultiplexer (13) (as in figure 4) to a better exploitation of the analogical line of access, an submodule Broadband access (10) and, in the use of VoIP, it includes one gateway (4) and the servers for signalling (6, 7).
**Mobile device**: Here a great amount of existing equipment in the market is included. It includes the possibility of mobile handsets (2G) and of generation 2,5G and 3G. The 2,5G and 3G devices allow the shipment of programs and, in this way, the necessary agents to the service of data.
Beyond the mobile handsets, one another group of mobile terminals can be used, that is represented by the PDAs (Personal Assistance Date) with access to wireless mobile systems through modems available in the market. However, for PDAs that does not have any integrated mobile wireless access capability, modem cards can be used, that can have access to the wireless mobile system.The voice service, using of the capacity of the applicatory ones for telephony can, also, be used.
Also, these solutions to other types of devices can be applied, as for example, the Handheld PCs. Still, extending the concept to utmost point, one can, also, be used laptop with the card.
**The mobile terminal utilisation for access to the fixed network:**
An important aspect so that the handset, developed for the wireless mobile network, being adjusted to the solution proposed, are the utilisation possibilities of the mobile radio wireless interfaces for the access to the fixed network, through the Broadband access as well as the analogical subscriber line.
The fundamental kind of access, foreseen in this solution, involves the use of a common handset for the fixed network access, through a common analogical line, to allow the service of basic telephony (voice), being able to concentrate more than one user in the analogical line of access. For this, the adaptation of the mobile radio interface of the cellular mobile system (TDMA, GSM and CDMA) for an analogical signal, is necessary. In this form, the conversion of the coded voice signal in the cellular system to an analogical voice signal and signalling made in the mobile radio interface for the signalling of the analogical subscriber line in fixed telephony, is done. With this easiness, the solution applies itself to any handset.
**Devices of Broadband access**: The solution of Broadband access, as, for example, based in ADSL (Assimetrical Digital Subscriber Line) is a solution that, today, wide is used for applications of broadband access to the InterNet for small offices and home office and consists of an adequate solution to the proposal. Other types of Broadband access also can be used as the family of access MMDS, LMDS, WLAN, etc.
**Gateways**: Gateways allows that it makes the inter-operation of the solution based on voice on IP, on the local PSTN operator, for the circuit switched network. On the side of the network based on IP, the SIP for the signalling between the terminals is used. For the digitally coded voice signal transport, protocol RTP is used over IP over a specific transport, normally Ethernet. On the side of the circuit switched network, an interface PCM, the E1 (T1) for the voice signal transmission is used, also digitally coded. For the signalling, it is used circuit switched signalling. Gateway will be located, in the network,on the points next to the fixed accesses as possible. In this form, the solution does not depend on the evolution of the InterNet for the provisions of Quality of service.
The mobile call origination through the the fixed network will be done through the mobile radio interface; therefore, one layer 3 software module for Call Control inside the module of access to fixed network will exist in order to forward the call through the the fixed PSTN network. This module will implement the conversion of mobile signaling to the PSTN subscriber line signaling. After the connection is stablished, the module is responsible for tha coded voice signal conversion to the analogical voice signal in a case of analogical subscriber line or to the Fixed network VoIP, in the case of digital subscriber line.

For the he mobile call termination through the fixed network (PSTN)the following prossess must ocurr: The calling user calls the mobile called user. The cellular mobile system of the called user pages the user on the last cell it hás made the registration. Since the user is in the control channel of the concentrative device, it does not respond the paging to the mobile system and, then, a message returns to the MSC which forwards the call to the fixed network. To do this, one switch feature must be activated.

The technician in the area will understand that the some illustrative logical blocks, modules, circuits and stages of described algorithms in connection with the modalities here described, can be implemented as the electronic hardware, software of computer, or a combination of these. To clearly illustrate this interchageability between hardware and software, several illustrative components, blocks, modules, circuits, and stages had been described generally in terms of its functionality. If such functionality is implemented in the hardware or software all depends on its specific application and project limits imposed in the system. The technician in the area can implement the functionalities described in several forms for each specific application, however such decisions of implementation do not have to be interpreted as out of the target of the present invention.

The diverse illustrative logical blocks, modules, and described circuits in connection with the described modalities can here be implemented or be carried through with a generic digital processor, a Processor of Digital Signals (DSP), an Integrated Circuit of Specific Aplication (ASIC), a Net of Programmable Logical Gates (FPGA) or other programmable logical devices, discret doors or logic of transistor, discrete components of the hardware, or any combination projected to carry through the functions here described. A generic processor can be a microprocessor, however alternatively, the processor can be any conventional processor, a controller, a micro controller or a state machine. A processor can also be implemented as a combination of computational devices as a DSP and a microprocessor, a plurality of microprocessors, one or more microprocessors in set with a DSP nucleus, or any of such configurations.
The stages of a described method or algorithm in connection with the modalities here disclosed can directly be constructed in the hardware, in a module of software executed by a processor, or in a combination of both. A software module can exist in a memory RAM, memory flash, memory ROM, memory EPROM, memory EEPROM, recorders, hard disks, removable records, a CD-ROM or any another known form of storage of the technique. A way of exemplary storage is connected to the processor in a way that the processor can read and record information in the half of storage. Alternatively, the way of storage can be integrant part of the processor. The processor and the way of storage can exist in a ASIC. The ASIC can exist in the user terminal.
Alternatively, the processor and the way of storage can inhabit as component discrete in an user terminal.

The previous description of the preferred modalities is supplied to allow that the technician in the area creates or makes use of the present invention. The several modifications to these modalities will be readily apparent to the technician in the area, and the general principles defined here can be applied to other modalities without the inventive college use. In this form, the present invention does not have to be limited to the modalities shown here but it must here be waked up the consistent wide target with the principles and described characteristics of newness.

## Claims

1. Concentrative system of access to the fixed and mobile telephony services, that allows access to the PSTN and to the services of the wireless mobile system **characterized by** the fact of that it understands:
a mobile device; and
an access concentrator device, that allows that the mobile device has access, beyond the wireless mobile service, to the services of the PSTN, directing the calls for the fixed network, after the access carried through the concentrative device of access.

2. System, in accordance with claim 1, characterized for the fact of that the mobile terminal can be:
a handset (2G, 2,5G or 3G); or
a PDA (Personal Data Assistance) with capacity to have access to the wireless mobile network as a standardized mobile radio interface;
or a Handheld PC or a laptop with an accessory for a mobile radio access.

3. System, in accordance with claim 1, characterized for the fact of that the concentrative device of access understands:
an adapting module of an wireless based on the mobile radio interface of the wireless mobile system;.
a module of access to the fixed PSTN network that understands:
a submodule of access to the analogical line, through its analogical interface; and
a Broadband submodule access, for services based on data,
where the access submodules can be connected to a MUX/DEMUX to combine users pertinent to the area of covering of the concentrator in one only line of the subscriber access to PSTN, allowing the simultaneous use of several users; and on the side of the fixed network operator it also uses a MUX/DEMUX to combine the connections deriving from the only line of the network to allow its use for multiples users simultaneously.

4. System, in accordance with claim 1, characterized for the fact of that it comprehends the authentication of the user, as well as procedure of authentication for the used cellular system, in which the concentrator is inserted in it's covered area, processed in the concentrator device.

5. System, in accordance with claim 1, characterized for the fact that it allows the user to have automatically access to the system, inside of the its covering area, transferring the directing of its calls of the mobile network to the fixed network and on the inverse way;

6. System, in accordance with claim 1, characterized for the fact that the submodule which provides access to the fixed network through the Broadband access uses Voice over IP (VoIP).

7. System, in accordance with claim 6, characterized for the fact that it comprehends gateways, that allow the inter-operation of Voice over IP, in the network of the local operator, for the circuit switched network.

8. System, in accordance with claim 6, characterized for the fact of that it comprehends interfaces for IP telephony, including protocols for the establishment and management of sessions, as the SIP, of transference of media as Real Time Transfer Protocol (RTP), in interfaces where a form established for the voice service does not exist as, the Broadband access for the fixed service.

9. System, in accordance with claim 6, characterized for the fact that it comprehends a protocol to authenticate and to authorize the user to have access the system.
